(19)

Europäisches
Patentamt
European
Patent Office
Office européen
des brevets

(11) **EP 3 333 720 A1**

(12) **EUROPEAN PATENT APPLICATION**

(43) Date of publication:
**13.06.2018 Bulletin 2018/24**

(51) Int Cl.:
*G06F 17/16* (2006.01)     *H04N 5/225* (2006.01)

(21) Application number: **16306664.0**

(22) Date of filing: **12.12.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Thomson Licensing**
**92130 Issy-les-Moulineaux (FR)**

(72) Inventors:
• **KERBIRIOU, Paul**
  **35576 Cesson Sévigné (FR)**
• **DAMGHANIAN, Mitra**
  **35576 Cesson Sévigné (FR)**
• **BURELLER, Olivier**
  **35576 Cesson Sévigné (FR)**

(74) Representative: **Coda, Sandrine**
**TECHNICOLOR**
**1-5, rue Jeanne d'Arc**
**92130 Issy-les-Moulineaux (FR)**

(54) **A METHOD AND AN APPARATUS FOR ENCODING A SIGNAL TRANSPORTING DATA FOR RECONSTRUCTING A SPARSE MATRIX**

(57)     The present invention relates to method for storing and transmitting sparse matrices in compact way. When storing and manipulating sparse matrices on a device, it is beneficial and often necessary to use speciafized algorithms and data structures that take advantage of the sparse structure of the matrix. The trade-off is that accessing the individual elements becomes more complex and additional structures are needed to be able to recover the original matrix unambiguously.

The method according to an embodiment of the invention consists in storing indexes enabling to determine the position in the matrix of non-null elements in an ordered way so as to limit the amount of information to be encoded and thus reduce the amount of data to be transmitted. The encoded information are enough for enabling the reconstruction of the matrix on a receiver.

FIG. 8

**Description**

TECHNICAL FIELD

The present invention relates to method for storing and transmitting sparse matrices in compact way. More particularly the invention concerns the storing and transmitting of sparse matrices containing data representative of light-field contents in a compact way.

BACKGROUND

A sparse matrix is a matrix in which most of the elements are null, i.e. their value is equal to zero. The number of null elements divided by the total number of elements is called the sparsity of the matrix.

When storing and manipulating sparse matrices on a device, it is beneficial and often necessary to use specialized algorithms and data structures that take advantage of the sparse structure of the matrix. Operations using standard dense-matrix structures and algorithms are slow and inefficient when applied to large sparse matrices as processing and memory are wasted on the null elements. Sparse data is by nature more easily compressed and thus require significantly less storage. Some very large sparse matrices are infeasible to manipulate using standard dense-matrix algorithms.

A matrix is typically stored as a two-dimensional array. Each entry in the array represents an element $a_{i,j}$ of the matrix and is accessed by the two indices $i$ and $j$. Conventionally, $i$ is the row index, numbered from top to bottom, and $j$ is the column index, numbered from left to right. For an $m \times n$ matrix, the amount of memory required to store the matrix in this format is proportional to $m \times n$, disregarding the fact that the dimensions of the matrix also need to be stored.

In the case of a sparse matrix, substantial memory requirement reductions can be realized by storing only the non-null entries. Depending on the number and distribution of the non-null entries, different data structures can be used and yield huge savings in memory when compared to the basic approach. The trade-off is that accessing the individual elements becomes more complex and additional structures are needed to be able to recover the original matrix unambiguously.

A first method for storing a sparse matrix called *Compressed Sparse Row* (CSR) is disclosed in Tinney, William F., and John W. Walker. "Direct solutions of sparse network equations by optimally ordered triangular factorization." Proceedings of the IEEE 55.11 (1967): 1801-1809. It consists in representing a two-dimensional matrix M by three one-dimensional arrays, that respectively contain non-null values, the extents of rows, and column indices. It enables to compress the row indices, hence the name. This method allows fast row access and matrix-vector multiplications.

A second method for storing sparse matrices is called CSC (*Compressed Sparse Column)* and is similar to CSR except that values are read first by column, a row index is stored for each value, and column pointers are stored. I.e. in the CSC method the format is (*val, row_ind, col_ptr),* where *val* is an array of the (top-to-bottom, then left-to-right) non-null elements of the matrix; *row_ind* is the row indices corresponding to the elements; and *col_ptr* is the list of *val* indexes where each column starts. This format is efficient for arithmetic operations, column slicing, and matrix-vector products.

The acquisition of four-dimensional or 4D light-field data, which can be viewed as a sampling of a 4D light field, i.e. the recording of light rays, is explained in the article "Understanding camera trade-offs through a Bayesian analysis of light field projections" by Anat Levin and al., which has been published in the conference proceedings of ECCV 2008.

Compared to classical two-dimensional or 2D images obtained from a camera, 4D light-field data enable a user to have access to more post-processing features that enhance the rendering of images and the interactivity with the user. For example, with 4D light-field data, it is possible to perform refocusing of images with freely selected distances of focalization meaning that the position of a focal plane can be specified/selected a posteriori, as well as changing slightly the point of view in the scene of an image.

There are several ways to represent 4D light-field data. One of them consists in storing the 4D light-field data in four-dimensional sparse matrices.

However, the methods for storing and transmitting sparse matrices are not appropriate to store and transmit matrices having more than two dimensions.

The present invention has been devised with the foregoing in mind.

SUMMARY OF INVENTION

According to a first aspect of the invention there is provided a computer implemented method for encoding a signal transporting data for reconstructing a matrix having at least two dimensions (2D), a position of an element in said matrix being given by an index in each dimension of said matrix, said method comprising encoding:

- at least a first parameter comprising an identifier of a first dimension of said matrix and a first index in said first dimension,
- a plurality of second parameters, each of them comprising an identifier of a second dimension of said matrix and a second index in said second dimension, an association of said first parameter and one of said second parameters giving a position of a non-null element in said matrix,
- a plurality of third parameters, each of them associated to a value of a non-null element which position in said matrix is given by said association of said first parameter and one of said second parameters.

Such a method enables to store spare matrices, and more particularly huge matrices, in a compact way. Indeed, the method according to an embodiment of the invention consists in storing indexes enabling to determine the position in the matrix of non-null elements in an ordered way so as to limit the amount of information to be encoded and thus reduce the amount of data to be transmitted. The encoded information are enough for enabling the reconstruction of the matrix on a receiver.

For example, in the case of a three-dimensional matrix, a first identifier X identifies the first dimension, a second identifier Y identifies the second dimension, and a third identifier Z identifies the third dimension. In the first dimension, the matrix comprises, for example, four elements, i.e. there are four indexes 0, 1, 2 and 3. In the second dimension, the matrix comprises, for example, three elements, i.e. there are three indexes 0, 1,2. In the third dimension, the matrix comprises, for example, three elements, i.e. there are three indexes 0, 1,2. In other words, the matrix is a 4x3x3 matrix.

Firstly, the first parameter is encoded. This parameter comprises the identifier X of the first dimension, and the first index 0 in this dimension.

Then, a second parameter is encoded. This parameter comprises the identifier Y of the second dimension, and the index in this dimension corresponding to the position of a non-null element of the matrix, e.g. 2.

Then, a third parameter is encoded. This parameter comprises the identifier Z of the third dimension, and the index in this dimension corresponding to the position of a non-null element of the matrix, e.g. 0. Thus the position of this non-null element is given by the triplet (X, 0; Y, 2; Z, 0).

Then, another third parameter is encoded defining the position of another non-element of the matrix. This parameter comprises the identifier Z of the third dimension, and the index in this dimension corresponding to the position of a non-null element of the matrix, e.g. 2. Thus the position of this non-null element is given by the triplet (X, 0; Y, 2; Z, 2).

Since those two non-null elements share the same coordinates in the first and the second dimension, those information are encoded only once in order to provide a compact format.

Then the method is executed for the next index in the first dimension, i.e. the fist parameter comprises the identifier X of the first dimension, and the second index 1 in this dimension, etc.

Another advantage of the method described above is that in applies to matrices of two or more dimensions.

According to an embodiment of the invention, the third parameter is a pointer pointing toward the values of the elements of said matrix stored in a data file.

Such an implementation avoids encoding the values of the non-null elements of the matrix together with information related to the positions of said elements in the matrix. It enables to process the information related to the positions of said elements in the matrix and the data file comprising the values of the different elements of the matrix separately. This introduces a flexibility in the processing of these different types of data.

According to an embodiment of the invention, the method further comprises encoding a fourth set of parameters intended to be used to reconstruct said matrix from the first, second and third sets of parameters.

This fourth set of parameters comprises information enabling to reconstruct the matrix from the encoded signal such as an identifier of the first dimension to be encoded, the order in which the dimensions are encoded e.g. X, Y Z or Z, Y, X, etc., the order in which the indexes in a given dimension are sorted, etc.

According to an embodiment of the invention, the matrix has four dimensions (4D), and a non-null element of said matrix represents a ray of light sensed by a pixel of a sensor an optical device, the method comprises encoding:

- the first parameter comprising the identifier of the first dimension of said matrix and the first index in said first dimension,
- the second parameter comprising the identifier of the second dimension of said matrix and the second index in said second dimension,
- a fifth parameter comprising an identifier of a third dimension of said matrix and a third index in said third dimension,
- a plurality of sixth parameters, each of them comprising an identifier of a fourth dimension of said matrix and a fourth index in said fourth dimension, an association of said first, second, fifth and one of said sixth parameters representing a ray of light sensed by a pixel of the sensor of said optical device, and
- a plurality of third parameters, each of them associated to an element of said matrix and representing colour data, of an object of a scene, sensed by the pixel of the sensor of said optical device corresponding to the ray of light represented by said association of said first, second, fifth and one of said sixth parameters.

In the method according to an embodiment of the invention, the parameters represent the rays of light sensed by the different pixels of the sensor of the optical system.

The method according to an embodiment of the invention is not limited to data directly acquired by an optical device. These data may be Computer Graphics Image (CGI) that are totally or partially simulated by a computer for a given scene description. Another source of data may be post-produced data that are modified, for instance colour graded, light-field data obtained from an optical device or CGI. It is also now common in the movie industry to have data that are a mix of both data acquired using an optical acquisition device, and CGI data. It is to be understood that the pixel of a sensor can be simulated by a computer-generated scene system and, by extension, the whole sensor can be simulated by said system. From here, it is understood that any reference to a "pixel of a sensor" or a "sensor" can be either a physical object attached to an optical acquisition device or a simulated entity obtained by a computer-generated scene system.

Such an encoding method enables to encode in a compact format data for reconstructing light field data.

According to an embodiment of the invention, the method further comprises encoding a seventh set of parameters intended to be used to reconstruct said rays of light from the association of said first, second, fifth and one of said sixth parameters.

Those parameters are obtained from the calibration of the optical device.

According to an embodiment of the invention, the third parameters are arranged in an order in which the associated elements of said matrix, representing colour data and corresponding to rays of light represented by said association of said first, second, fifth and one of said sixth parameters, are encoded.

The parameters representing the rays of light reflect the geometry of the optical device. Consequently, these parameters are not changing over time or very rarely when, for example zooming is performed. Those parameters are obtained from the calibration of the optical device.

It is thus, more convenient to arrange the parameter representative of colour data which are changing over time, e.g. for every image acquired by the optical device, in the same order in which the geometry data are encoded.

Another object of the invention concerns a device for encoding a signal transporting data for reconstructing a matrix having at least two dimensions (2D), a position of an element in said matrix being given by an index in each dimension of said matrix, said device comprising a processor configured to encode:

- at least a first parameter comprising an identifier of a first dimension of said matrix and a first index in said first dimension,
- a plurality of second parameters, each of them comprising an identifier of a second dimension of said matrix and a second index in said second dimension, an association of said first parameter and one of said second parameters giving a position of a non-null element in said matrix,
- a plurality of third parameters, each of them associated to a value of a non-null element which position in said matrix is given by said association of said first parameter and one of said second parameters.

Such a device is for example an optical acquisition device, e.g. a camera, a smartphone, a tablet, etc. or a storing device capable of storing data files such as light-field data or huge sparse matrices, e.g. USB keys, hard disk drives, etc.

According to an embodiment of the invention, the matrix has four dimensions (4D), and a non-null element of said matrix represents a ray of light sensed by a pixel of a sensor an optical device, the processor is further configured to encode:

- the first parameter comprising the identifier of the first dimension of said matrix and the first index in said first dimension,
- the second parameter comprising the identifier of the second dimension of said matrix and the second index in said second dimension,
- a fifth parameter comprising an identifier of a third dimension of said matrix and a third index in said third dimension,
- a plurality of sixth parameters, each of them comprising an identifier of a fourth dimension of said matrix and a fourth index in said fourth dimension, an association of said first, second, fifth and one of said sixth parameters representing a ray of light sensed by a pixel of the sensor of said optical device, and
- a plurality of third parameters, each of them associated to an element of said matrix and representing colour data, of an object of a scene, sensed by the pixel of the sensor of said optical device corresponding to the ray of light represented by said association of said first, second, fifth and one of said sixth parameters.

Another object of the invention concerns a computer implemented method for reconstructing a matrix having at least two dimensions (2D), a position of an element in said matrix being given by an index in each dimension of said matrix, said method comprising:

- decoding a signal comprising:

  • at least a first parameter comprising an identifier of a first dimension of said matrix and a first index in said first dimension,
  • a plurality of second parameters, each of them comprising an identifier of a second dimension of said matrix and a second index in said second dimension, an association of said first parameter and one of said second parameters giving a position of a non-null element in said matrix,
  • a plurality of third parameters, each of them associated to a value of a non-null element which position in said matrix is given by said association of said first parameter and one of said second parameters,
  • a fourth set of parameters intended to be used to reconstruct said matrix from the first, second and third sets of parameters,

- reconstructing said matrix based on the decoded first set of parameters, the decoded second set of parameters, the decoded third set of parameters and the decoded fourth set of parameters.

According to an embodiment of the invention, the matrix has four dimensions (4D), and a non-null element of said matrix represents a ray of light sensed by a pixel of a sensor an optical device, the signal to be decoded further comprises:

- a fifth parameter comprising an identifier of a third dimension of said matrix and a third index in said third dimension,
- a plurality of sixth parameters, each of them comprising an identifier of a fourth dimension of said matrix and a fourth index in said fourth dimension, an association of said first, second, fifth and one of said sixth parameters representing a ray of light sensed by a pixel of the sensor of said optical device,

the third parameters, associated to elements of said matrix and representing colour data, of an object of a scene, sensed by the pixel of the sensor of said optical device corresponding to rays of light represented by said association of said first, second, fifth and one of said sixth parameters.

The invention also concerns device for reconstructing a matrix having at least two dimensions (2D), a position of an element in said matrix being given by an index in each dimension of said matrix, said device comprising a processor configured to:

- decode a signal comprising:

  • at least a first parameter comprising an identifier of a first dimension of said matrix and a first index in said first dimension,
  • a plurality of second parameters, each of them comprising an identifier of a second dimension of said matrix and a second index in said second dimension, an association of said first parameter and one of said second parameters giving a position of a non-null element in said matrix,
  • a plurality of third parameters, each of them associated to a value of a non-null element which position in said matrix is given by said association of said first parameter and one of said second parameters,
  • a fourth set of parameters intended to be used to reconstruct said matrix from the first, second and third sets of parameters,

- reconstruct said matrix based on the decoded first set of parameters, the decoded second set of parameters, the decoded third set of parameters and the decoded fourth set of parameters.

According to an embodiment of the invention, the matrix has four dimensions (4D), and a non-null element of said matrix represents a ray of light sensed by a pixel of a sensor an optical device, and the processor is further configured to decode:

- a fifth parameter comprising an identifier of a third dimension of said matrix and a third index in said third dimension,
- a plurality of sixth parameters, each of them comprising an identifier of a fourth dimension of said matrix and a fourth index in said fourth dimension, an association of said first, second, fifth and one of said sixth parameters representing a ray of light sensed by a pixel of the sensor of said optical device,

the third parameters, associated to elements of said matrix and representing colour data, of an object of a scene, sensed by the pixel of the sensor of said optical device corresponding to rays of light represented by said association of said first, second, fifth and one of said sixth parameters.

Another object of the invention is a signal transporting data for reconstructing a matrix having at least two dimensions (2D), a position of an element in said matrix being given by an index in each dimension of said matrix, said signal being transmitted by an encoding device and comprising at least a message comprising:

- at least a first parameter comprising an identifier of a first dimension of said matrix and a first index in said first dimension,
- a plurality of second parameters, each of them comprising an identifier of a second dimension of said matrix and a second index in said second dimension, an association of said first parameter and one of said second parameters giving a position of a non-null element in said matrix,
- a plurality of third parameters, each of them associated to a value of a non-null element which position in said matrix is given by said association of said first parameter and one of said second parameters.

According to an embodiment of the invention, the matrix has four dimensions (4D), and a non-null element of said matrix represents a ray of light sensed by a pixel of a sensor an optical device, the message further comprises:

- a fifth parameter comprising an identifier of a third dimension of said matrix and a third index in said third dimension,
- a plurality of sixth parameters, each of them comprising an identifier of a fourth dimension of said matrix and a fourth index in said fourth dimension, an association of said first, second, fifth and one of said sixth parameters representing a ray of light sensed by a pixel of the sensor of said optical device,

the third parameters, associated to elements of said matrix and representing colour data, of an object of a scene, sensed by the pixel of the sensor of said optical device corresponding to rays of light represented by said association of said first, second, fifth and one of said sixth parameters.

The invention concerns a digital file comprising data representative of a matrix having at least two dimensions (2D), a position of an element in said matrix being given by an index in each dimension of said matrix, said data comprising:

- at least a first parameter comprising an identifier of a first dimension of said matrix and a first index in said first dimension,
- a plurality of second parameters, each of them comprising an identifier of a second dimension of said matrix and a second index in said second dimension, an association of said first parameter and one of said second parameters giving a position of a non-null element in said matrix,
- a plurality of third parameters, each of them associated to a value of a non-null element which position in said matrix is given by said association of said first parameter and one of said second parameters.

According to an embodiment of the invention, the matrix has four dimensions (4D), and a non-null element of said matrix represents a ray of light sensed by a pixel of a sensor an optical device, the data further comprises:

- a fifth parameter comprising an identifier of a third dimension of said matrix and a third index in said third dimension,
- a plurality of sixth parameters, each of them comprising an identifier of a fourth dimension of said matrix and a fourth index in said fourth dimension, an association of said first, second, fifth and one of said sixth parameters representing a ray of light sensed by a pixel of the sensor of said optical device,

the third parameters, associated to elements of said matrix and representing colour data, of an object of a scene, sensed by the pixel of the sensor of said optical device corresponding to rays of light represented by said association of said first, second, fifth and one of said sixth parameters.

Some processes implemented by elements of the invention may be computer implemented. Accordingly, such elements may take the form of an entirely hardware embodiment, an entirely software embodiment (including firmware, resident software, micro-code, etc.) or an embodiment combining software and hardware aspects that may all generally be referred to herein as a "circuit", "module" or "system'. Furthermore, such elements may take the form of a computer program product embodied in any tangible medium of expression having computer usable program code embodied in the medium.

Since elements of the present invention can be implemented in software, the present invention can be embodied as computer readable code for provision to a programmable apparatus on any suitable carrier medium. A tangible carrier medium may comprise a storage medium such as a floppy disk, a CD-ROM, a hard disk drive, a magnetic tape device or a solid state memory device and the like. A transient carrier medium may include a signal such as an electrical signal, an electronic signal, an optical signal, an acoustic signal, a magnetic signal or an electromagnetic signal, e.g. a microwave or RF signal.

## BRIEF DESCRIPTION OF THE DRAWINGS

Embodiments of the invention will now be described, by way of example only, and with reference to the following drawings in which:

**Figure 1** is a block diagram of a light-field camera device in accordance with an embodiment of the invention,

**Figure 2** is a block diagram illustrating a particular embodiment of a potential implementation of light-field data formatting module,

**Figure 3** illustrates a ray of light passing through two reference planes $P_1$ and $P_2$ located at known depths $z_1$, and $z_2$ respectively and used for parameterization,

**Figure 4** illustrates a ray of light passing through a reference plane $P_3$ located at known depth $z_3$,

**Figure 5** represents the two reference planes $P_1$ and $P_2$ when discretized according to an embodiment of the invention,

**Figure 6** is a flow chart illustrating the steps of a method for discretizing the coordinates of the rays of light according to an embodiment of the invention,

**Figure 7** is a flow chart illustrating the steps of a method for storing and transmitting a sparse matrix according to an embodiment of the invention,

**Figure 8** represents a two dimensional matrix having three rows and four columns stored according to an embodiment of the invention,

**Figure 9** represents a data stream comprising information enabling to locate a non-null element in a matrix according to an embodiment of the invention,

**Figure 10** is a schematic block diagram illustrating an example of an apparatus for reconstructing a matrix according to an embodiment of the present disclosure,

**Figure 11** is a flow chart illustrating the steps of a method for reconstructing a sparse matrix according to an embodiment of the invention.

## DETAILED DESCRIPTION

As will be appreciated by one skilled in the art, aspects of the present principles can be embodied as a system, method or computer readable medium. Accordingly, aspects of the present principles can take the form of an entirely hardware embodiment, an entirely software embodiment, (including firmware, resident software, micro-code, and so forth) or an embodiment combining software and hardware aspects that can all generally be referred to herein as a "circuit", "module", or "system". Furthermore, aspects of the present principles can take the form of a computer readable storage medium. Any combination of one or more computer readable storage medium(a) may be utilized.

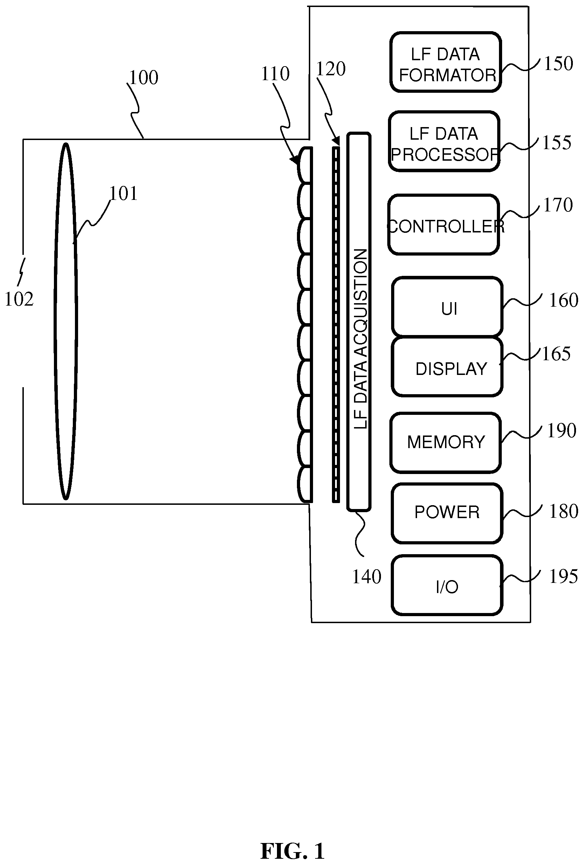

**Figure 1** is a block diagram of a light-field camera device in accordance with an embodiment of the invention. The light-field camera comprises an aperture/shutter 102, a main (objective) lens 101, a micro lens array 110 and a photosensor array. In some embodiments the light-field camera includes a shutter release that is activated to capture a light-field image of a subject or scene.

The photosensor array 120 provides light-field image data which is acquired by LF Data acquisition module 140 for generation of a light-field data format by light-field data formatting module 150 and/or for processing by light-field data processor 155. Light-field data may be stored, after acquisition and after processing, in memory 190 in a raw data format, as sub aperture images or focal stacks, or in a light-field data format in accordance with embodiments of the invention.

In the illustrated example, the light-field data formatting module 150 and the light-field data processor 155 are disposed in or integrated into the light-field camera 100. In other embodiments of the invention the light-field data formatting module 150 and/or the light-field data processor 155 may be provided in a separate component external to the light-field capture camera. The separate component may be local or remote with respect to the light-field image capture device. It will be appreciated that any suitable wired or wireless protocol may be used for transmitting light-field image data to the formatting module 150 or light-field data processor 155; for example the light-field data processor may transfer captured light-field image data and/ or other data via the Internet, a cellular data network, a WiFi network, a Bluetooth® communication protocol, and/ or any other suitable means.

The light-field data formatting module 150 is configured to generate data representative of the acquired light-field, in accordance with embodiments of the invention. The light-field data formatting module 150 may be implemented in software, hardware or a combination thereof.

The light-field data processor 155 is configured to operate on raw light-field image data received directly from the LF data acquisition module 140 for example to generate formatted data and metadata in accordance with embodiments of the invention. Output data, such as, for example, still images, 2D video streams, and the like of the captured scene may be generated. The light-field data processor may be implemented in software, hardware or a combination thereof.

In at least one embodiment, the light-field camera 100 may also include a user interface 160 for enabling a user to provide user input to control operation of camera 100 by controller 170. Control of the camera may include one or more of control of optical parameters of the camera such as shutter speed, or in the case of an adjustable light-field camera, control of the relative distance between the microlens array and the photosensor, or the relative distance between the objective lens and the microlens array. In some embodiments the relative distances between optical elements of the light-field camera may be manually adjusted. Control of the camera may also include control of other light-field data acquisition parameters, light-field data formatting parameters or light-field processing parameters of the camera. The user interface 160 may comprise any suitable user input device(s) such as a touchscreen, buttons, keyboard, pointing device, and/ or the like. In this way, input received by the user interface can be used to control and/ or configure the LF data formatting module 150 for controlling the data formatting, the LF data processor 155 for controlling the processing of the acquired light-field data and controller 170 for controlling the light-field camera 100.

The light-field camera includes a power source 180, such as one or more replaceable or rechargeable batteries. The light-field camera comprises memory 190 for storing captured light-field data and/or processed light-field data or other data such as software for implementing methods of embodiments of the invention. The memory can include external and/ or internal memory. In at least one embodiment, the memory can be provided at a separate device and/ or location from camera 100. In one embodiment, the memory includes a removable/swappable storage device such as a memory stick.

The light-field camera may also include a display unit 165 (e.g., an LCD screen) for viewing scenes in front of the camera prior to capture and/or for viewing previously captured and/or rendered images. The screen 165 may also be used to display one or more menus or other information to the user. The light-field camera may further include one or more I/O interfaces 195, such as FireWire or Universal Serial Bus (USB) interfaces, or wired or wireless communication interfaces for data communication via the Internet, a cellular data network, a WiFi network, a Bluetooth® communication protocol, and/ or any other suitable means. The I/O interface 195 may be used for transferring data, such as light-field representative data generated by LF data formatting module in accordance with embodiments of the invention and light-field data such as raw light-field data or data processed by LF data processor 155, to and from external devices such as computer systems or display units, for rendering applications.

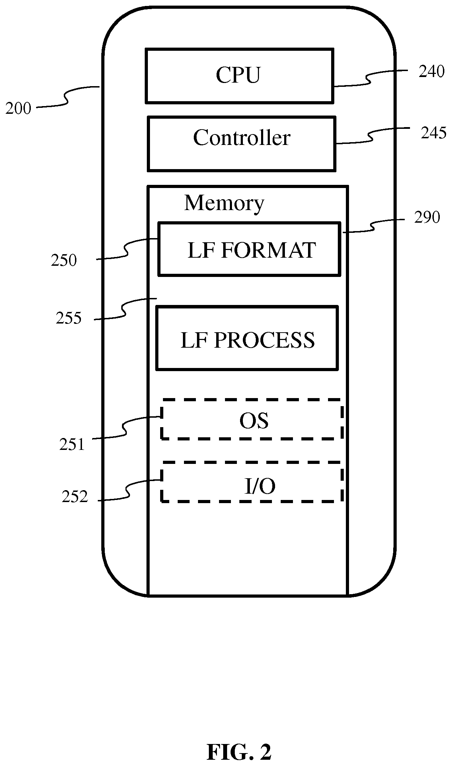

**Figure 2** is a block diagram illustrating a particular embodiment of a potential implementation of light-field data formatting module 250 and the light-field data processor 253.

The circuit 200 includes memory 290, a memory controller 245 and processing circuitry 240 comprising one or more processing units (CPU (s)). The one or more processing units 240 are configured to run various software programs and/or sets of instructions stored in the memory 290 to perform various functions including light-field data formatting and light-field data processing. Software components stored in the memory include a data formatting module (or set of instructions) 250 for generating data representative of acquired light data in accordance with embodiments of the invention and a light-field data processing module (or set of instructions) 255 for processing light-field data in accordance with embodiments of the invention. Other modules may be included in the memory for applications of the light-field camera device such as an operating system module 251 for controlling general system tasks (e.g. power management, memory management) and for facilitating communication between the various hardware and software components of the device 200, and an interface module 252 for controlling and managing communication with other devices via I/O interface ports.

Embodiments of the invention are relying on a representation of light-field data based on rays of light sensed by the pixels of the sensor of a camera or simulated by a computer-generated scene system and their orientation in space, or more generally of a sensor of an optical device. Indeed, another source of light-field data may be post-produced data that are modified, for instance color graded, light-field data obtained from an optical device or CGI. It is also now common in the movie industry to have data that are a mix of both data acquired using an optical acquisition device, and CGI data. It is to be understood that the pixel of a sensor can be simulated by a computer-generated scene system and, by extension, the whole sensor can be simulated by said system. From here, it is understood that any reference to a "pixel of a sensor" or a "sensor" can be either a physical object attached to an optical acquisition device or a simulated entity obtained by a computer-generated scene system.

Knowing that whatever the type of acquisition system, to a pixel of the sensor of said acquisition system corresponds at least a linear light trajectory, or ray of light, in space outside the acquisition system, data representing the ray of light in a three-dimensional (or 3D) space are computed.

It is to be understood that the invention is not limited to data acquired by plenoptic cameras, and may be used to process data acquired by conventional cameras, camera rigs, and more generally by any type of camera.

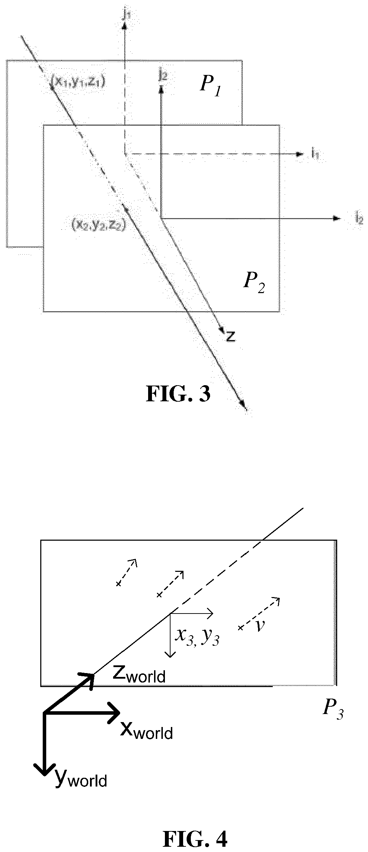

In a first embodiment, **Figure 3** illustrates a ray of light passing through two reference planes $P_1$ and $P_2$ used for parameterization positioned parallel to one another and located at known depths $z_1$ and $z_2$ respectively. The $z$ direction, or depth direction, corresponds to the direction of the optical axis of the optical device used to obtain the light field data.

The ray of light intersects the first reference plane $P_1$ at depth $z_1$ at intersection point $(x_1, y_1)$ and intersects the

second reference plane $P_2$ at depth $z_2$ at intersection point $(x_2, y_2)$. In this way, given $z_1$ and $z_2$, the ray of light can be identified by four coordinates $(x_1, y_1, x_2, y_2)$. The light-field can thus be parameterized by a pair of reference planes for parameterization $P_1$, $P_2$ also referred herein as parametrization planes, with each ray of light being represented as a point $(x_1, y_1, x_2, y_2,) \in R^4$ in 4D ray space.

In a second embodiment represented on **Figure 4**, the ray of light is parametrized by means a point of intersection between a reference plane $P_3$ located at known depths $z_3$ and the ray of light.

The ray of light intersects the reference plane $P_3$ at depth $z_3$ at intersection point $(x_3, y_3)$. A normalized vector

$$\left(v_x, v_y, \sqrt{1 - (v_x^2 + v_y^2)}\right) ,$$

$v$, which provides the direction of the ray of light in space has the following coordinates:

since $v_z = \sqrt{1 - (v_x^2 + v_y^2)}$ $v_z$ is assumed to be positive and it can be recalculated knowing $v_x$ and $v_y$, the vector can be described only by its two first coordinates $(v_x, v_y)$.

According to this second embodiment, the ray of light may be identified by four coordinates $(x_3, y_3, v_x, v_y)$. The light-field can thus be parameterized by a reference plane for parameterization $P_3$ also referred herein as parametrization plane, with each ray of light being represented as a point $(x_3, y_3, v_x, v_y) \in R^4$ in 4D ray space.

The invention consists in reducing the amount of information, and in coding the coordinates in a less generic space than when coded using floating point numbers.

To this end, the formatting module 250 discretize each coordinates $(x_1, y_1, x_2, y_2)$ and store indices, which are integers instead of floating point numbers. This allows to reduce the number of bits used to encode each coordinates, knowing a small error of quantization is introduced.

The formatting module 250 replace the 4D coordinates $(x_1, y_1, x_2, y_2)$ describing a ray of light with a set of 4D indices $(i_{x1}, i_{y1}, i_{x2}, i_{y2})$, the only constraint being that it is not allowed that two distinct rays of light have the four same indices.

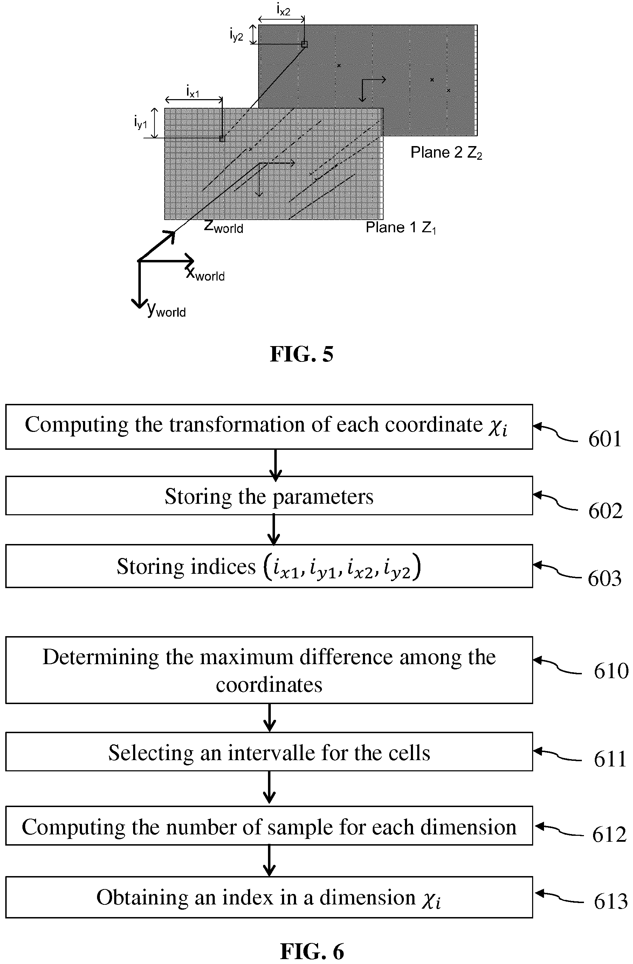

**Figure 5** represents the two reference planes $P_1$ and $P_2$ when each coordinates $(x_1, y_1, x_2, y_2)$ are discretized according to an embodiment of the invention.

In this first embodiment, a constant number of samples in each direction is chosen, i.e. each dimension is split in $2^N$ samples. Indeed the number N is chosen to respect the above constraint that two distinct rays of light must not have the four same indices, to get the smallest error as possible, and N must be small enough to minimize the number of bits required to store the four indices representing a ray of light.

In a second embodiment, N is chosen arbitrary. Then, the formatting module 250 checks whether N respects the constraints.

**Figure 6** is a flow chart illustrating the steps of a method for discretizing the coordinates of the rays of light according to an embodiment of the invention.

In case the light-field acquisition system is calibrated using a pinhole model, the basic projection model, without distortion, is given by the following equation:

$$\begin{pmatrix} u \\ v \\ 1 \end{pmatrix} = 1/Z_c \begin{pmatrix} f & 0 & c_u & 0 \\ 0 & f & c_v & 0 \\ 0 & 0 & 1 & 0 \end{pmatrix} \begin{pmatrix} X_c \\ Y_c \\ Z_c \\ 1 \end{pmatrix} = \begin{pmatrix} f\frac{X_c}{Z_c} + c_u \\ f\frac{Y_c}{Z_c} + c_v \\ 1 \end{pmatrix}$$

where

- $f$ is the focal length of the main lens of the camera 100,
- $c_u$ and $c_v$ are the coordinates of the intersection of the optical axis of the camera 100 with the sensor,
- $(X_c, Y_c, Z_c, 1)^T$ is the position in the camera coordinate system of a point in the space sensed by the camera,
- $(u, v, 1)^T$ are the coordinates, in the sensor coordinate system, of the projection of the point which coordinates are $(X_c, Y_c, Z_c, 1)^T$ in the camera coordinate system on the sensor of the camera.

The light-field data formatting module 150 computes the coordinates of a vector V representing the direction of the ray of light in space that is sensed by the pixel of the sensor which coordinates are $(u, v, 1)^T$ in the sensor coordinate system. In the sensor coordinate system, the coordinates of vector V are:

$$(u - c_u, v - c_v, f)^T.$$

**EP 3 333 720 A1**

In the pinhole model, the coordinates of the intersection of the ray of light sensed by the pixel which coordinates are $(u,v,1)^{\mathsf{T}}$, with a plane placed at coordinate $Z_1$ from the pinhole and parallel to the sensor plane are:

$$\left( (u - c_u)\frac{Z_1}{f}, (v - c_v)\frac{Z_1}{f}, Z_1 \right)^{\mathsf{T}}.$$

If several acquisition are mixed, i.e. acquisition of light-field data by different types of cameras, then a single coordinate system is used. In this situation, modifications of coordinates of the points and vectors should be handled accordingly.

According to an embodiment of the invention, the sets of coordinates defining the rays of light sensed by the pixels of the sensor of the camera are regrouped in a matrix having four dimensions. In another embodiment, the rays of light are directly computed by a computer-generated scene system that simulates the propagation of rays of light.

In an embodiment of the invention, this matrix is associated with a colour map of a scene to be transmitted to a receiver. Thus in this embodiment, to each pixel (u, v) of the sensor of the camera corresponds a ray of light sensed by said pixel and a parameter representative of the colour data associated to the same ray of light sensed by the same given pixel and a quadruplet of floating point values ($\chi_1\ \chi_2\ \chi_3\ \chi_4$) which correspond either to ($x_1,y_1,x_2,y_2,$) when the ray of light is parameterized by a pair of reference planes for parameterization $P_1$, $P_2$ or ($x_3,y_3,v_x,v_y,$) when the ray of light is parametrized by means of a normalized vector. In the following description, the quadruplet of floating point values ($\chi_1\ \chi_2\ \chi_3\ \chi_4$) is given by:

$$\chi_1 = (u - c_u)\frac{Z_1}{f}$$

$$\chi_2 = (v - c_v)\frac{Z_1}{f}$$

$$\chi_3 = (u - c_u)\frac{Z_2}{f}$$

$$\chi_4 = (v - c_v)\frac{Z_2}{f}.$$

In another embodiment, the acquisition system is not calibrated using a pinhole model, consequently the parametrization by two planes is not recalculated from a model. Instead, the parametrization by two planes has to be measured during a calibration operation of the camera. This may be for instance the case for a plenoptic camera which includes in between the main lens and the sensor of the camera a micro-lens array.

In yet another embodiment, the matrix is directly simulated by a computer-generated scene system or post-produced from acquired data.

In a step 601, for each coordinate $\chi_i$ of a ray of light, the formatting module 250 computes the following transformations:

$$i_{\chi i} = integer\left(2^N \frac{\chi_i - \chi_{i\,min}}{\chi_{i\,max} - \chi_{i\,min}}\right)$$

where $\chi_{i\,min}$ and $\chi_{i\,max}$ are the minimum and maximum values of the real coordinates in a given dimension. These parameters are then stored in the memory 290, in a step 602, in order to be transmitted as metadata since they are used to retrieve the real 4D coordinates of the rays of light.

In a step 603, the formatting module 250 stores the indices ($i_{x1}$, $i_{y1}$, $i_{x2},i_{y2}$) representing each rays of light in a matrix having four dimensions.

Another embodiment of the invention consists in finding a same metric interval for all the four dimensions used to define a light-field. The goal is to find the greatest interval that allows to separate two distinct rays of light.

**10**

In a step 610, the formatting module 250 determines the maximum difference among the coordinates of at least two rays of light i and i':

$$\partial_{i,i'} = \max(abs\left(x_1^i - x_1^{i'}\right), abs\left(y_1^i - y_1^{i'}\right), abs\left(x_2^i - x_2^{i'}\right), abs\left(y_2^i - y_2^{i'}\right))$$

Then, the formatting module 250 selects as an interval for cells, the min among all the $\partial_{i,i'}$ values, in a step 611 :

$$\Delta = \left(\min_{i,i'} \partial_{i,i'}\right) - \varepsilon$$

where $\varepsilon$ is a small number that can be chosen for instance as $\varepsilon = \left(\min_{i,i'} \partial_{i,i'}\right) * 0.01.$ This reduction $\varepsilon$ enables to make sure that the interval is smaller than the smallest difference.

Then, in a step 612, the formatting module 250 computes for each dimension the number of samples:

$$N_{\chi i} = \frac{\left(\chi_{i\,max} - \chi_{i\,min}\right)}{\Delta}$$

An index in a dimension in $(x_1, y_1, x_2, y_2)$, is obtained by the formatting module 250, in a step 613, with the following equation:

$$i_{\chi i} = integer(\frac{\chi_i - \chi_{i\,min}}{\Delta})$$

Thus the coordinates $(x_1, y_1, x_2, y_2)$ of a ray of light are transformed into a set of four indices $(i_{x1}, i_{y1}, i_{x2}, i_{y2})$.

Since a ray of light sensed by a pixel of the sensor of the camera is represented by a quadruplet of indices $(i_{x1}, i_{y1}, ix_2, iy_2)$, it is possible to store these four parameters into a matrix having four dimensions, the index $i_{x1}$ corresponding to a ray of light sensed by a pixel of the sensor of the camera being a first index in the first dimension of the matrix, the index $iy_1$ corresponding to the same ray of light sensed by the pixel of the sensor of the camera being a second index in the second dimension of the matrix, the index $i_{x2}$ corresponding to the same ray of light sensed by the pixel of the sensor of the camera being a third index in the third dimension of the matrix, and the index $iy_2$ corresponding to the same ray of light sensed by the pixel of the sensor of the camera being a fourth index in the fourth dimension of the matrix.

Since the data stored in such a matrix are 4D light-field data, most of the cells of the matrix are empty, i.e. most of the elements of the matrix are null.

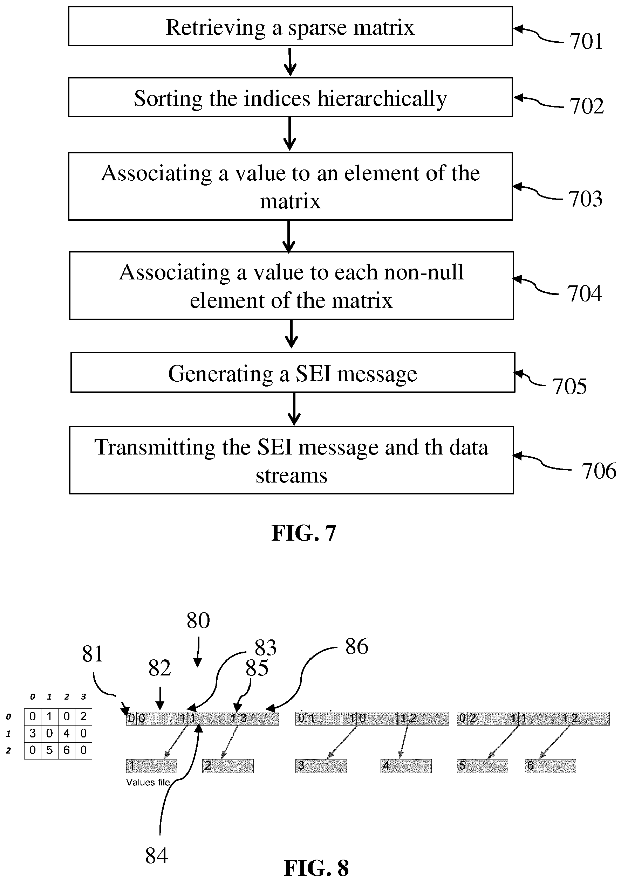

**Figure 7** is a flow chart illustrating the steps of a method for storing and transmitting a sparse matrix according to an embodiment of the invention. The matrices processed by the method according to an embodiment of the invention are sparse matrices. In an example, these matrices comprise light-field data, but they may comprise any other type of data.

In a step 701, the formatting module 250 retrieves a sparse matrix to store and to transmit. For example in the case of light-field data, such a matrix is either obtained from the method described in reference to figure 6 or from the calibration data of a camera used for acquiring such light-field data.

In the method according to an embodiment of the invention, a specific syntax is used to code the indices $(i_{x1}, i_{y1}, i_{x2}, i_{y2})$ representing a location of an element in the matrix. In the case of a four dimensional matrix, two bits may be used to code the index identifying each dimension of the matrix, as it is shown in the following table:

Table 1

| Bit 0 | Bit 1 | Index type |
|-------|-------|------------|
| 0 | 0 | X1 |
| 0 | 1 | y1 |
| 1 | 0 | x2 |
| 1 | 1 | y2 |

For example, the index identifying a dimension of the matrix is encoded as the two most significant bits (MSB) of a data packet.

The index of the dimension (j) can be coded in fixed binary format and so, for a space of dimension N, the number of bits necessary to code this dimension is $\log_2 (N)$.

For example, in a case of a matrix having four dimensions, an index may be encoded using 32 bits, the two most significant bits indicating the dimension$(i_{x_1}, i_{y_1}, i_{x_2}, i_{y_2})$ and the lower 30 bits containing the index in the dimension.

In a step 702, the formatting module 250 sorts the indices hierarchically, starting from dimension N-1, then N-2, etc. down to dimension 0. In the case of a four-dimensional matrix this consists in sorting first the indices of the fourth dimension $i_{y_2}$ then the indices of the third dimension $i_{x_2}$ then the indices of the second dimension $i_{y_1}$ and at last the indices of the first dimension $i_{x_1}$.

The list of indices is stored using the following algorithm:

- Store the index in the higher dimension,
- Store indices of successive lower dimensions.

For example **figure 8** represents a two dimensional matrix having three rows and four columns. In this example, the dimension is coded using one bit: 0 for the row dimension, 1 for the column dimension since $\log_2 (2) = 1$.

In this example, the higher dimension is the row dimension. In order to store the non-null elements of the matrix, the formatting module 250 first encodes a parameter 81 representing the dimension, here 0 on the first data stream 80 of figure 8, meaning the first dimension is the row dimension. Then, the formatting module 250 encodes the index 82 in the dimension, which is 0 in the example, and identifies the first row of the matrix. The formulating module then continues to generate the data stream 80 by encoding the parameter 83, representing the second dimension, here a 1 indicating the column dimension, and then the index 84 in this dimension where a non-null element is located in the matrix, here the index value is 1, meaning the element in located in the second column of the matrix. The formatting module 250 then continues to generate the data stream 80 by encoding the parameter 85, representing the second dimension, here a 1 indicating the column dimension, and then the index 86 in this dimension where a non-null element is located in the matrix, here the index value is 3.

Thus the data stream 80 comprises the location of all the non-null elements of the matrix located in the first row of the matrix. The information is coded in a compact way since there are no redundant information, the common parameter between all the non-null elements of the matrix, i.e. the row of the matrix, being coded only once.

Then the formatting module 250 increment the index in the higher dimension and continues encoding the data locating the non-null elements in the matrix.

Then in a step 703, the formatting module 250 associates a value of the element of the matrix to the data representing the location of said element in the matrix. Said association is for example a pointer pointing toward a file containing the values of the elements of the matrix. In reference to figure 8, the first location, given by the parameter 81, the index 82 and the parameter 83 and the index 84, points toward the value 1 and the second location, given by the parameter 81, the index 82 and the parameter 85 and the index 86, points toward the value 2.

In the case of light-field data, to each quadruplet $(i_{x_1}, i_{y_1}, i_{x_2}, i_{y_2})$ i corresponds a pixel of a sensor of an acquisition device.

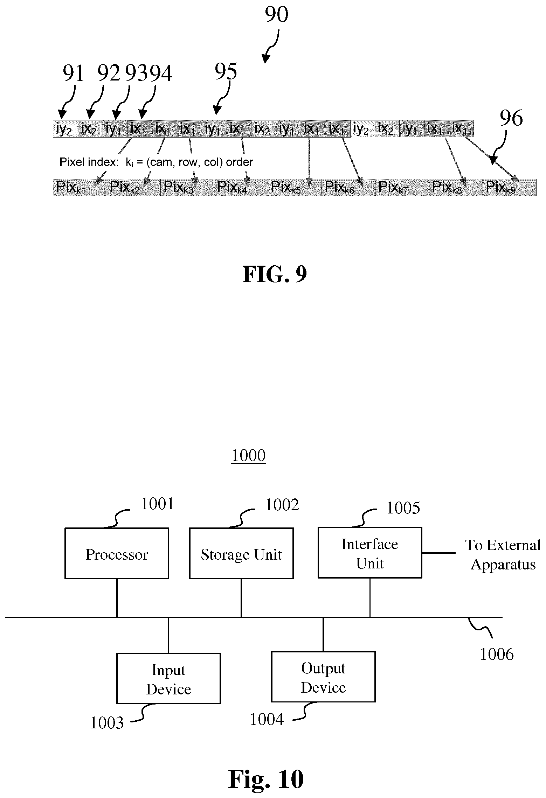

When processing light-field data, the higher dimension is the $y_2$ dimension, then the $x_2$ dimension, then the $y_1$ dimension and then the $x_1$ dimension. In order to store the non-null elements of a matrix representing light-field data, the formatting module 250 first generate data stream comprising the location of the non-null elements of the matrix, which correspond to the rays of light sensed by the pixels of the sensor of an acquisition device. Such a data stream 90 is represented in **figure 9.**

The formatting module 250 encodes a first parameter 91 representing the dimension $y_2$, e.g. 11 as mentioned in table 1. Then, the formatting module 250 encodes the index in the $y_2$ dimension. Then, the formulating module encodes a parameter 92 of the second dimension $x_2$, here a 10 in table 1, and then the index in this $x_2$ dimension. Then, the formulating module encodes a parameter 93 of the third dimension $y_1$, here 01 in table 1, and then the index in this $y_1$ dimension. Then, the formulating module 250 encodes a parameter 94 of the fourth dimension $x_1$, here 00 in table 1, and then the index in this$x_1$ dimension, as many times, here three times as there are non-null elements in the matrix sharing the same triplet $(y_2, x_2, y_1)$.

Then the formatting module 250 increment the index 95 in the third dimension and continues encoding the data locating the non-null elements in the matrix. Then the formatting module 250 encodes the location of the next non-null element of the matrix in the fourth dimension.

Then the formatting module 250 increment the index in the second dimension and continues encoding the data locating the non-null elements in the matrix, etc.

Thus the location of the non-null elements of the matrix may be encoded using the following data structure, which is another example, distinct from the one given in reference to figure 9, for the data stream, wherein IdDim is the parameter identifying the dimension and DimInd is the index in the considered dimension, each dimension having 3 indices:

- IdDim = $y_2$, DimInd = 0

  • IdDim = $x_2$, DimInd = 0

    ▪ IdDim = $y_1$, DimInd = 0

      ✔ IdDim = $x_1$, DimInd = 1
      ✔ IdDim = $x_1$, DimInd = 2

    ▪ IdDim = $y_1$, DimInd = 1

      ✔ IdDim = $x_1$, DimInd = 0

    ▪ IdDim = $y_1$, DimInd = 2

      ✔ IdDim = $x_1$, DimInd = 0
      ✔ IdDim = $x_1$, DimInd = 1
      ✔ IdDim = $x_1$, DimInd = 2

  • IdDim = $x_2$, DimInd = 1

    ▪ IdDim = $y_1$, DimInd = 0

      ✔ IdDim = $x_1$, DimInd = 1

    ▪ IdDim = $y_1$, DimInd = 1

      ✔ IdDim $x_1$, DimInd = 0

  • IdDim = $x_2$, DimInd = 2

    ▪ IdDim = $y_1$, DimInd = 0

      ✔ IdDim = $x_1$, DimInd = 1

    ▪ IdDim = $y_1$, DimInd = 1

      ✔ IdDim = $x_1$, DimInd = 0

    ▪ IdDim = $y_1$, DimInd = 2

      ✔ IdDim = $x_1$, DimInd = 0
      ✔ IdDim = $x_1$, DimInd = 1
      ✔ IdDim = $x_1$, DimInd = 2

- IdDim = $y_2$, DimInd = 1

  • IdDim = $x_2$, DimInd = 0

    ▪ IdDim = $y_1$, DimInd = 0

      ✔ IdDim = $x_1$, DimInd = 1
      ✔ IdDim = $x_1$, DimInd = 2

    ▪ IdDim = $y_1$, DimInd = 1

         ✔ IdDim = $x_1$, DimInd = 0

      ▪ IdDim = $y_1$, DimInd = 2

         ✔ IdDim = $x_1$, DimInd = 0
         ✔ IdDim = $x_1$, DimInd = 1
         ✔ IdDim = $x_1$, DimInd = 2

- •   IdDim = $x_2$, DimInd = 1

      ▪ IdDim = $y_1$, DimInd = 0

         ✔ IdDim = $x_1$, DimInd = 1

      ▪ IdDim = $y_1$, DimInd = 1

         ✔ IdDim = $x_1$, DimInd = 0

- •   IdDim = $x_2$, DimInd = 2

      ▪ IdDim = $y_1$, DimInd = 0

         ✔ IdDim = $x_1$, DimInd = 1

      ▪ IdDim = $y_1$, DimInd = 1

         ✔ IdDim = $x_1$, DimInd = 0

      ▪ IdDim = $y_1$, DimInd = 2

         ✔ IdDim = $x_1$, DimInd = 0
         ✔ IdDim = $x_1$, DimInd = 1
         ✔ IdDim = $x_1$, DimInd = 2

- **-**   IdDim = $y_2$, DimInd = 2

  •   IdDim = $x_2$, DimInd = 0

      ▪ IdDim = $y_1$, DimInd = 0

         ✔ IdDim = $x_1$, DimInd = 1
         ✔ IdDim = $x_1$, DimInd = 2

      ▪ IdDim = $y_1$, DimInd = 1

         ✔ IdDim = $x_1$, DimInd = 0

      ▪ IdDim = $y_1$, DimInd = 2

         ✔ IdDim = $x_1$, DimInd = 0
         ✔ IdDim = $x_1$, DimInd = 2

  •   IdDim = $x_2$, DimInd = 1

      ▪ IdDim = $y_1$, DimInd = 0

         ✔ IdDim = $x_1$, DimInd = 1

- IdDim = $y_1$, DimInd = 1

    ✓ IdDim = $x_1$, DimInd = 0

- IdDim = $x_2$, DimInd = 2

    - IdDim = $y_1$, DimInd = 0

        ✓ IdDim = $x_1$, DimInd = 1

    - IdDim = $y_1$, DimInd = 1

        ∘ IdDim = $x_1$, DimInd = 0

    - IdDim = $y_1$, DimInd = 2

        ✓ IdDim = $x_1$, DimInd = 2

In a step 704, an index 96 points towards the image, as acquired by the optical acquisition device, associating to each non-null element of the matrix a corresponding value. That enable to rearrange the image data in the same organization as the non-null elements of the matrix. In the case of light-field data, the value of the elements of the matrix are RGB values acquired by the pixels of the sensor which sensed the different rays of lights and so, these RBGvalues are continuously changing along time while the geometry of the camera, the location of the non-null elements in the matrix, remains the same.

In a step 705, the formatting module generates a message comprising a set of parameters intended to be used during reciprocal computation on the receiver side to retrieve the original matrix. Those parameters, for example, comprise the number of dimensions of the matrix, the syntax used to encode indices identifying each dimension of the matrix, e.g. table 1 and parameters enabling to determine which is the highest dimension of the matrix, e.g. $y_2$ is the highest dimension, then $x_2$, etc.

In the case of a matrix representing light-field data, the message comprises also a set of parameters enabling to compute the original coordinates $(\chi_1,\chi_2,\chi_3,\chi_4)$ of each rays of light from their indices $(i_{x1},i_{y1},i_{x2},i_{y2})$ such as $\chi_{i\,min}$, $N\chi_i$ and $\Delta$.

In a step 706, data streams 80, 90, the pointers 96 and the message are transmitted to at least a receiver where these data are processed in order to render the matrix and its content.

**Figure 10** is a schematic block diagram illustrating an example of an apparatus for reconstructing a matrix according to an embodiment of the present invention.

The apparatus 1000 comprises a processor 1001, a storage unit 1002, an input device 1003, a display device 1004, and an interface unit 1005 which are connected by a bus 1006. Of course, constituent elements of the computer apparatus 1000 may be connected by a connection other than a bus connection.

The processor 1001 controls operations of the apparatus 1000. The storage unit 1002 stores at least one program to be executed by the processor 1001, and various data, including data of 4D light-field images captured and provided by a light-field camera, parameters used by computations performed by the processor 1001, intermediate data of computations performed by the processor 1001, and so on. The processor 1001 may be formed by any known and suitable hardware, or software, or a combination of hardware and software. For example, the processor 1001 may be formed by dedicated hardware such as a processing circuit, or by a programmable processing unit such as a CPU (Central Processing Unit) that executes a program stored in a memory thereof.

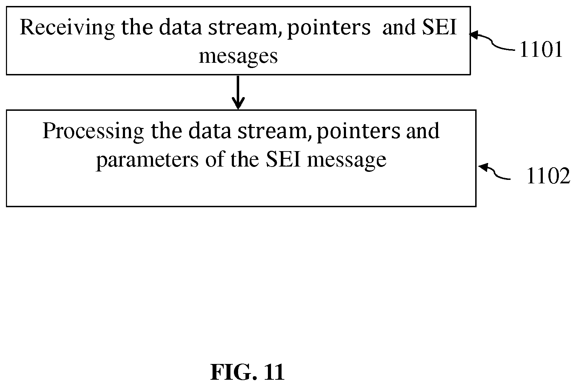

The storage unit 1002 may be formed by any suitable storage or means capable of storing the program, data, or the like in a computer-readable manner. Examples of the storage unit 1002 include non-transitory computer-readable storage media such as semiconductor memory devices, and magnetic, optical, or magneto-optical recording media loaded into a read and write unit. The program causes the processor 1001 to reconstruct a matrix according to an embodiment of the present disclosure as described with reference to figure 11.

The input device 1003 may be formed by a keyboard, a pointing device such as a mouse, or the like for use by the user to input commands. The output device 1004 may be formed by a display device to display, for example, a Graphical User Interface (GUI), matrix generated according to an embodiment of the present disclosure. The input device 1003 and the output device 1004 may be formed integrally by a touchscreen panel, for example.

The interface unit 1005 provides an interface between the apparatus 1000 and an external apparatus. The interface unit 1005 may be communicable with the external apparatus via cable or wireless communication. In an embodiment, the external apparatus may be a light-field camera. In this case, data of 4D light-field images captured by the light-field camera can be input from the light-field camera to the apparatus 1000 through the interface unit 1005, then stored in the storage unit 1002.

In this embodiment the apparatus 1000 is exemplary discussed as it is separated from the light-field camera and they are communicable each other via cable or wireless communication, however it should be noted that the apparatus 1000 can be integrated with such a light-field camera. In this later case, the apparatus 1000 may be for example a portable device such as a tablet or a smartphone embedding a light-field camera.

**Figure 11** is a flow chart illustrating the steps of a method for reconstructing a sparse matrix according to an embodiment of the invention. This method is executed, for example, by the processor 1001 of the apparatus 1000.

In a step 1101, the apparatus 1000 receives the data streams 80, 90, the pointers 96, the RGB file storing all the RGB values sensed by the pixels of the sensor of the acquisition device and the SEI message.

In a step 1102, the processor 1001 processes the data streams 80, 90, the pointers 96, the RGB file and the parameters comprised in the SEI message, in order to reconstruct matrix and consequently the light-field content.

When the coordinates of the rays of light are discretized according to the first embodiment described in reference to figure 6, the original coordinates may be retrieved according the following equation:

$$\chi_i{}' = i_\chi \frac{\left(\chi_{i\,max} - \chi_{i\,min}\right)}{2^N} + \chi_{i\,min}$$

Where the maximum error is $\varepsilon = (\chi_i' - \chi_i) = \pm 2^{-(N+1)}$

When the coordinates of the rays of light are discretized according to the second embodiment described in reference to figure 6, the original coordinates may be retrieved according the following equation:

$$\chi_i{}' = i_\chi * \Delta + \chi_{i\,min}$$

where the maximum error is $\varepsilon = \Delta$ .Although the present invention has been described hereinabove with reference to specific embodiments, the present invention is not limited to the specific embodiments, and modifications will be apparent to a skilled person in the art which lie within the scope of the present invention.

Many further modifications and variations will suggest themselves to those versed in the art upon making reference to the foregoing illustrative embodiments, which are given by way of example only and which are not intended to limit the scope of the invention, that being determined solely by the appended claims. In particular the different features from different embodiments may be interchanged, where appropriate.

**Claims**

1. A computer implemented method for encoding a signal transporting data for reconstructing a matrix having at least two dimensions (2D), a position of an element in said matrix being given by an index in each dimension of said matrix, said method comprising encoding:

   - at least a first parameter comprising an identifier of a first dimension of said matrix and a first index in said first dimension,
   - a plurality of second parameters, each of them comprising an identifier of a second dimension of said matrix and a second index in said second dimension, an association of said first parameter and one of said second parameters giving a position of a non-null element in said matrix,
   - a plurality of third parameters, each of them associated to a value of a non-null element which position in said matrix is given by said association of said first parameter and one of said second parameters.

2. The method according to claim 1, wherein the third parameter is a pointer pointing toward the values of the elements of said matrix stored in a data file.

3. The method according to claim 1 further comprising encoding a fourth set of parameters intended to be used to reconstruct said matrix from the first, second and third sets of parameters.

4. The method according to any of claims 1 to 3, wherein the matrix has four dimensions (4D), and a non-null element of said matrix represents a ray of light sensed by a pixel of a sensor an optical device, the method comprising encoding:

- the first parameter comprising the identifier of the first dimension of said matrix and the first index in said first dimension,
- the second parameter comprising the identifier of the second dimension of said matrix and the second index in said second dimension,
- a fifth parameter comprising an identifier of a third dimension of said matrix and a third index in said third dimension,
- a plurality of sixth parameters, each of them comprising an identifier of a fourth dimension of said matrix and a fourth index in said fourth dimension, an association of said first, second, fifth and one of said sixth parameters representing a ray of light sensed by a pixel of the sensor of said optical device, and
- a plurality of third parameters, each of them associated to an element of said matrix and representing colour data, of an object of a scene, sensed by the pixel of the sensor of said optical device corresponding to the ray of light represented by said association of said first, second, fifth and one of said sixth parameters.

5. The method according to claim 4, further comprising encoding a seventh set of parameters intended to be used to reconstruct said rays of light from the association of said first, second, fifth and one of said sixth parameters.

6. The method according to claim 4, wherein the third parameters are arranged in an order in which the associated elements of said matrix, representing colour data and corresponding to rays of light represented by said association of said first, second, fifth and one of said sixth parameters, are encoded.

7. A device for encoding a signal transporting data for reconstructing a matrix having at least two dimensions (2D), a position of an element in said matrix being given by an index in each dimension of said matrix, said device comprising a processor configured to encode:

- at least a first parameter comprising an identifier of a first dimension of said matrix and a first index in said first dimension,
- a plurality of second parameters, each of them comprising an identifier of a second dimension of said matrix and a second index in said second dimension, an association of said first parameter and one of said second parameters giving a position of a non-null element in said matrix,
- a plurality of third parameters, each of them associated to a value of a non-null element which position in said matrix is given by said association of said first parameter and one of said second parameters.

8. The device according to claim 7, wherein the matrix has four dimensions (4D), and a non-null element of said matrix represents a ray of light sensed by a pixel of a sensor an optical device, the processor being further configured to encode:

- the first parameter comprising the identifier of the first dimension of said matrix and the first index in said first dimension,
- the second parameter comprising the identifier of the second dimension of said matrix and the second index in said second dimension,
- a fifth parameter comprising an identifier of a third dimension of said matrix and a third index in said third dimension,
- a plurality of sixth parameters, each of them comprising an identifier of a fourth dimension of said matrix and a fourth index in said fourth dimension, an association of said first, second, fifth and one of said sixth parameters representing a ray of light sensed by a pixel of the sensor of said optical device, and
- a plurality of third parameters, each of them associated to an element of said matrix and representing colour data, of an object of a scene, sensed by the pixel of the sensor of said optical device corresponding to the ray of light represented by said association of said first, second, fifth and one of said sixth parameters.

9. A computer implemented method for reconstructing a matrix having at least two dimensions (2D), a position of an element in said matrix being given by an index in each dimension of said matrix, said method comprising:

- decoding a signal comprising:

• at least a first parameter comprising an identifier of a first dimension of said matrix and a first index in said first dimension,
• a plurality of second parameters, each of them comprising an identifier of a second dimension of said matrix and a second index in said second dimension, an association of said first parameter and one of said second parameters giving a position of a non-null element in said matrix,
• a plurality of third parameters, each of them associated to a value of a non-null element which position in said matrix is given by said association of said first parameter and one of said second parameters,
• a fourth set of parameters intended to be used to reconstruct said matrix from the first, second and third sets of parameters,

- reconstructing said matrix based on the decoded first set of parameters, the decoded second set of parameters, the decoded third set of parameters and the decoded fourth set of parameters.

10. The method according to claim 9, wherein the matrix has four dimensions (4D), and a non-null element of said matrix represents a ray of light sensed by a pixel of a sensor an optical device, the signal to be decoded further comprises:

- a fifth parameter comprising an identifier of a third dimension of said matrix and a third index in said third dimension,
- a plurality of sixth parameters, each of them comprising an identifier of a fourth dimension of said matrix and a fourth index in said fourth dimension, an association of said first, second, fifth and one of said sixth parameters representing a ray of light sensed by a pixel of the sensor of said optical device,

the third parameters, associated to elements of said matrix and representing colour data, of an object of a scene, sensed by the pixel of the sensor of said optical device corresponding to rays of light represented by said association of said first, second, fifth and one of said sixth parameters.

11. A device for reconstructing a matrix having at least two dimensions (2D), a position of an element in said matrix being given by an index in each dimension of said matrix, said device comprising a processor configured to:

- decode a signal comprising:

• at least a first parameter comprising an identifier of a first dimension of said matrix and a first index in said first dimension,
• a plurality of second parameters, each of them comprising an identifier of a second dimension of said matrix and a second index in said second dimension, an association of said first parameter and one of said second parameters giving a position of a non-null element in said matrix,
• a plurality of third parameters, each of them associated to a value of a non-null element which position in said matrix is given by said association of said first parameter and one of said second parameters,
• a fourth set of parameters intended to be used to reconstruct said matrix from the first, second and third sets of parameters,

- reconstruct said matrix based on the decoded first set of parameters, the decoded second set of parameters, the decoded third set of parameters and the decoded fourth set of parameters.

12. The device according to claim 11, wherein the matrix has four dimensions (4D), and a non-null element of said matrix represents a ray of light sensed by a pixel of a sensor an optical device, and the processor being further configured to decode:

- a fifth parameter comprising an identifier of a third dimension of said matrix and a third index in said third dimension,
- a plurality of sixth parameters, each of them comprising an identifier of a fourth dimension of said matrix and a fourth index in said fourth dimension, an association of said first, second, fifth and one of said sixth parameters representing a ray of light sensed by a pixel of the sensor of said optical device,

the third parameters, associated to elements of said matrix and representing colour data, of an object of a scene, sensed by the pixel of the sensor of said optical device corresponding to rays of light represented by said association of said first, second, fifth and one of said sixth parameters.

13. Signal transporting data for reconstructing a matrix having at least two dimensions (2D), a position of an element in said matrix being given by an index in each dimension of said matrix, said signal being transmitted by an encoding device and comprising at least a message comprising:

- at least a first parameter comprising an identifier of a first dimension of said matrix and a first index in said first dimension,
- a plurality of second parameters, each of them comprising an identifier of a second dimension of said matrix and a second index in said second dimension, an association of said first parameter and one of said second parameters giving a position of a non-null element in said matrix,
- a plurality of third parameters, each of them associated to a value of a non-null element which position in said matrix is given by said association of said first parameter and one of said second parameters.

14. The signal according to claim 13, wherein the matrix has four dimensions (4D), and a non-null element of said matrix represents a ray of light sensed by a pixel of a sensor an optical device, the message further comprising:

- a fifth parameter comprising an identifier of a third dimension of said matrix and a third index in said third dimension,
- a plurality of sixth parameters, each of them comprising an identifier of a fourth dimension of said matrix and a fourth index in said fourth dimension, an association of said first, second, fifth and one of said sixth parameters representing a ray of light sensed by a pixel of the sensor of said optical device,

the third parameters, associated to elements of said matrix and representing colour data, of an object of a scene, sensed by the pixel of the sensor of said optical device corresponding to rays of light represented by said association of said first, second, fifth and one of said sixth parameters.

15. A digital file comprising data representative of a matrix having at least two dimensions (2D), a position of an element in said matrix being given by an index in each dimension of said matrix, said data comprising:

- at least a first parameter comprising an identifier of a first dimension of said matrix and a first index in said first dimension,
- a plurality of second parameters, each of them comprising an identifier of a second dimension of said matrix and a second index in said second dimension, an association of said first parameter and one of said second parameters giving a position of a non-null element in said matrix,
- a plurality of third parameters, each of them associated to a value of a non-null element which position in said matrix is given by said association of said first parameter and one of said second parameters.

16. The digital file according to claim 15, wherein the matrix has four dimensions (4D), and a non-null element of said matrix represents a ray of light sensed by a pixel of a sensor an optical device, the data further comprising:

- a fifth parameter comprising an identifier of a third dimension of said matrix and a third index in said third dimension,
- a plurality of sixth parameters, each of them comprising an identifier of a fourth dimension of said matrix and a fourth index in said fourth dimension, an association of said first, second, fifth and one of said sixth parameters representing a ray of light sensed by a pixel of the sensor of said optical device,

the third parameters, associated to elements of said matrix and representing colour data, of an object of a scene, sensed by the pixel of the sensor of said optical device corresponding to rays of light represented by said association of said first, second, fifth and one of said sixth parameters.

17. A computer program **characterized in that** it comprises program code instructions for the implementation of the method according to any of claims 1 to 6 when the program is executed by a processor.

18. A computer program **characterized in that** it comprises program code instructions for the implementation of the method according to any of claims 9 to 10 when the program is executed by a processor.

**FIG. 1**

**FIG. 2**

**FIG. 3**

**FIG. 4**

$i_{x2}$

$i_{y2}$

$i_{x1}$

$i_{y1}$

Plane 2 $Z_2$

$Z_{world}$    Plane 1 $Z_1$

$X_{world}$

$Y_{world}$

**FIG. 5**

| Computing the transformation of each coordinate $\chi_i$ | 601 |

| Storing the parameters | 602 |

| Storing indices $\left(i_{x1}, i_{y1}, i_{x2}, i_{y2}\right)$ | 603 |

| Determining the maximum difference among the coordinates | 610 |

| Selecting an intervalle for the cells | 611 |

| Computing the number of sample for each dimension | 612 |

| Obtaining an index in a dimension $\chi_i$ | 613 |

**FIG. 6**

Retrieving a sparse matrix — 701

Sorting the indices hierarchically — 702

Associating a value to an element of the matrix — 703

Associating a value to each non-null element of the matrix — 704

Generating a SEI message — 705

Transmitting the SEI message and th data streams — 706

**FIG. 7**

**FIG. 8**

**FIG. 9**

<u>1000</u>

**Fig. 10**

Receiving the data stream, pointers and SEI mesages — 1101

Processing the data stream, pointers and parameters of the SEI message — 1102

**FIG. 11**

Europäisches
Patentamt

European
Patent Office

Office européen
des brevets

# EUROPEAN SEARCH REPORT

Application Number

EP 16 30 6664

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Parker Allen Tew: "An Investigation of Sparse Tensor Formats for Tensor Libraries", Master Thesis, 1 September 2016 (2016-09-01), pages 1-53, XP055383749, Massachusetts Institute of Technology Retrieved from the Internet: URL:http://groups.csail.mit.edu/commit/papers/2016/parker-thesis.pdf [retrieved on 2017-06-21] | 1-3,7,9, 11,13, 15,17 | INV. G06F17/16 H04N5/225 |
| Y | * page 18 - page 27 * | 4-6,8, 10,12, 14,16,18 | |
| X | Andrew Berls: "BTables: A fast, compact disk format for machine learning ¦ Andrew Berls", 13 April 2016 (2016-04-13), XP055384237, Retrieved from the Internet: URL:http://andrewberls.com/blog/post/btables-a-fast-compact-disk-format-for-machine-learning [retrieved on 2017-06-22] | 1-3,7,9, 11,13, 15,17 | |
| Y | * page 2 * | 4-6,8, 10,12, 14,16,18 | |
| Y | US 2015/146032 A1 (RIME LAURENT [CH] ET AL) 28 May 2015 (2015-05-28) * paragraph [0226] - paragraph [0232] * | 4-6,8, 10,12, 14,16,18 | |

TECHNICAL FIELDS
SEARCHED      (IPC)

G06F
H04N

The present search report has been drawn up for all claims

| Place of search | Date of completion of the search | Examiner |
|---|---|---|
| Berlin | 23 June 2017 | Virnik, Elena |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

......................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 16 30 6664

This annex lists the patent family members relating to the patent documents cited in  the above-mentioned European search report.
The members are as contained in the European Patent Office EDP file on
The European Patent Office is in no way liable for these particulars which are merely given for the purpose of information.

23-06-2017

| Patent document cited in search report | Publication date | Patent family member(s) | Publication date |
|---|---|---|---|
| US 2015146032    A1 | 28-05-2015 | NONE | |

For more details about this annex : see Official Journal of the European Patent Office, No. 12/82

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **TINNEY, WILLIAM F. ; JOHN W. WALKER.** Direct solutions of sparse network equations by optimally ordered triangular factorization. *Proceedings of the IEEE,* 1967, vol. 55 (11), 1801-1809

- **ANAT LEVIN.** Understanding camera trade-offs through a Bayesian analysis of light field projections. *conference proceedings of ECCV,* 2008